# EUROPEAN PATENT APPLICATION

(11) **EP 1 324 584 A1**
(43) Date of publication of application: **02.07.2003**
(21) Application number: 01403233.8
(22) Date of filing: 13.12.2001
(51) Int. Cl.: H04M 11/06

(54) **Modem system and modems with tunable analog filters**

(71) Applicant: ALCATEL, 75008 Paris (FR)
(72) Inventor: Content, Jürgen Elisabeth Romain Dunja, 8370 Blankenberge (BE); Moons, Elvé Désiderius Jozef, 3560 Lummen (BE); De Clercq, Luc Josephine Theoduul, 9250 Waasmunster (BE)
(74) Representative: Narmon, Gisèle Marie Thérèse

(57) **Abstract**

Modem systems comprising Asymmetric Digital Subscriber Line modems (1,21) or ADSL modems (1,21) coupled via bidirectional lines (40) are insufficiently flexible. By providing the modems (1,21) with tunable analog filters (4,23), the upstream/downstream bandwidths can be adapted, in response to request signals. In case of said tunable analog filter being a tunable high pass filter (4) located in a first network modem (1), more bandwidth for the downstream can be introduced. In case of said request signal originating from a generator (31) in a second terminal modem (21), the terminal can request more bandwidth for the downstream, for example for video on demand. In case of said tunable analog filter being a tunable low pass filter (23) in said first modem (21), less bandwidth for the upstream can be introduced, thereby creating more bandwidth for the downstream. Said tunable analog filter (4,23) comprises a filter element like a capacity which is (de)activatable via a switch like a relais or a transistor.

## Description

The invention relates to a modem system comprising a first modem and a second modem coupled via a bidirectional line, with each modem comprising a transmitting part and a receiving part, with each part comprising at least one analog filter.

The invention further relates to a first modem for use in a modem system comprising said first modem and a second modem coupled via a bidirectional line, with each modem comprising a transmitting part and a receiving part, with each part comprising at least one analog filter, and to a second modem for use in a modem system comprising a first modem and said second modem coupled via a bidirectional line, with each modem comprising a transmitting part and a receiving part, with each part comprising at least one analog filter, and to a first modem method for use in a modem system comprising a first modem and a second modem coupled via a bidirectional line, with each modem comprising a transmitting part and a receiving part, with each part comprising at least one analog filter, and to a second modem method for use in a modem system comprising a first modem and a second modem coupled via a bidirectional line, with each modem comprising a transmitting part and a receiving part, with each part comprising at least one analog filter.

Such a modem system is generally known, with said first modem for example being an Asymmetric Digital Subscriber Line modem or ADSL modem for example located in or near a network-unit like a switch, a router, a bridge etc. and with said second modem for example being an Asymmetric Digital Subscriber Line modem or ADSL modem for example located in or near a terminal like a pc etc. Said first modem for example transmits signals to said second modem in the downstream tones 32 to 255 (with each tone for example being 4,3 kHz) and receives signals from said second modem in the upstream tones 7-31 (with each tone being for example 4,3 kHz), with said second modem in this case receiving signals from said first modem in the downstream tones 32 to 255 (with each tone for example being 4,3 kHz) and transmitting signals to said first modem in the upstream tones 7-31 (with each tone for example being 4,3 kHz).

The known modem system is disadvantageous, inter alia, due to being insufficiently flexible.

It is an object of the invention, inter alia, of providing a modem system as defined in the preamble which is more flexible.

The modem system according to the invention is characterised in that said first modem comprises at least one analog filter which is tunable in response to a request signal.

By providing said first modem with said tunable analog filter, the modem can react to and/or allow and/or introduce changed upstream/downstream bandwidths. Said request signal for example originates from a network-unit comprising this first modem or from other parts of a network comprising this network-unit, and is for example generated in response to more or less capacity being available in said network.

The invention is based on the insight, inter alia, that fixed filters are used for fixed bandwidths, and is based upon the basic idea, inter alia, that a more flexible modem system should have flexible bandwidths.

The invention solves the problem, inter alia, of providing a modem system which is more flexible.

A first embodiment of the modem system according to the invention is characterised in that said at least one tunable analog filter is a tunable high pass filter located in the transmitting part of said first modem..

By amending the high pass filter located in the transmitting part of said first modem into a tunable high pass filter, for example the cut off frequency can be decreased upon request, thereby introducing more bandwidth for the downstream.

A second embodiment of the modem system according to the invention is characterised in that said second modem comprises a generator for generating said request signal.

By providing the second modem with the generator for generating said request signal, the second modem can request more bandwidth for the downstream, for example for video on demand services.

A third embodiment of the modem system according to the invention is characterised in that said second modem comprises at least one analog filter which is tunable in response to a further request signal originating from said generator.

By providing said second modem with said tunable analog filter, the modem can react to and/or allow and/or introduce changed upstream/downstream bandwidths. Said further request signal either corresponds with said request signal or is different from said request signal, but will usually originate from said generator.

A fourth embodiment of the modem system according to the invention is characterised in that said at least one tunable analog filter is a tunable low pass filter located in the transmitting part of said second modem.

By amending the low pass filter located in the transmitting part of said second modem into a tunable low pass filter, for example the cut off frequency can be decreased upon request, thereby introducing less bandwidth for the upstream, and thus creating more bandwidth for the downstream.

A fifth embodiment of the modem system according to the invention is characterised in that at least one tunable analog filter comprises at least one filter element which is (de)activatable via at least one switch..

By (de)activating at least one filter element, like for example a capacity, via at least one switch, like for example a relais or a transistor, in an analog filter, this analog filter has been made tunable.

Embodiments of the first modem according to the invention are in correspondence with the first and fifth embodiments of the modem system according to the invention, and embodiments of the second modem according to the invention are in correspondence with the second, third, fourth and fifth embodiments of the modem system according to the invention, and embodiments of the first modem method according to the invention are in correspondence with the first and fifth embodiments of the modem system according to the invention and embodiments of the second modem method according to the invention are in correspondence with the second, third, fourth and fifth embodiments of the modem system according to the invention.

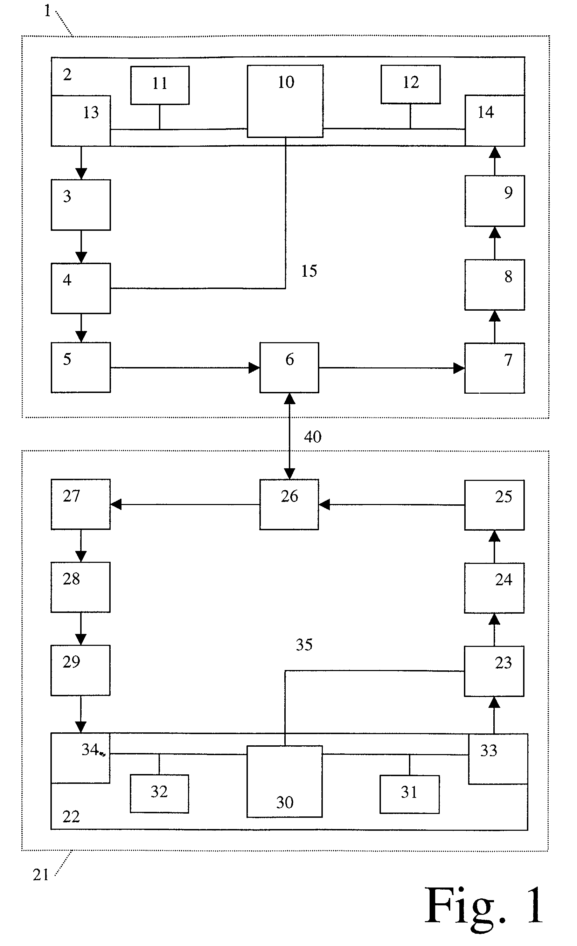

The invention will be further explained more detailledly at the hand of an example shown in the drawing, whereby
figure 1 discloses a modem system according to the invention comprising a first modem according to the invention and a second modem according to the invention.
Figure 1 discloses a first modem 1 coupled via a bidirectional line 40 to a second modem 21.

First modem 1 comprises a processor/memory 2 of which an output is coupled to an input of a low pass filter 3, of which an output is coupled to an input of a high pass filter 4, of which an output is coupled to an input of a driver 5, of which an output is coupled to an input of a hybrid 6. An in/output of hybrid 6 is coupled to line 40, and an output of hybrid 6 is coupled to an input of a low pass filter 7, of which an output is coupled to an input of an amplifier 8, of which an output is coupled to an input of a (for example low pass) filter 9, of which an output is coupled to an input of processor/memory 2. Processor/memory 2 includes, inter alia, a controller 10 which controller 10 is coupled to a receiver 12 and to an A/D converter 14 of which an input is coupled to said input of processor/memory 2, and which controller 10 is coupled to a generator 11 and to a D/A converter 13 of which an output is coupled to said output of processor/memory 2. Controller 10 is further coupled via a control connection 15 to a control input of high pass filter 4.

Second modem 21 comprises a processor/memory 22 of which an output is coupled to an input of a low pass filter 23, of which an output is coupled to an input of a high pass filter 24, of which an output is coupled to an input of a driver 25, of which an output is coupled to an input of a hybrid 26. An in/output of hybrid 26 is coupled to line 40, and an output of hybrid 26 is coupled to an input of a high pass filter 27, of which an output is coupled to an input of an amplifier 28, of which an output is coupled to an input of a (for example low pass) filter 29, of which an output is coupled to an input of processor/memory 22. Processor/memory 22 includes, inter alia, a controller 30 which controller 30 is coupled to a receiver 32 and to an A/D converter 34 of which an input is coupled to said input of processor/memory 22, and which controller 30 is coupled to a generator 31 and to a D/A converter 33 of which an output is coupled to said output of processor/memory 22. Controller 30 is further coupled via a control connection 35 to a control input of low pass filter 23.

According to prior art, first modem 1 is for example an Asymmetric Digital Subscriber Line modem or ADSL modem for example located in or near a network-unit like a switch, a router, a bridge etc. and second modem 21 is for example an Asymmetric Digital Subscriber Line modem or ADSL modem for example located in or near a terminal like a pc etc. Both modems 1,21 are communicating with each other via bidirectional line 40, for example for offering Video On Demand from/via said network-unit to said pc. First modem 1 for example transmits signals to said second modem 21 in the downstream tones 32 to 255 (with each tone for example being 4,3 kHz) and receives signals from said second modem 21 in the upstream tones 7-31 (with each tone being for example 4,3 kHz), with said second modem 21 in this case receiving signals from said first modem 1 in the downstream tones 32 to 255 (with each tone for example being 4,3 kHz) and transmitting signals to said first modem 1 in the upstream tones 7-31 (with each tone for example being 4,3 kHz).

Thereto, for example, low pass filter 3 has a cut off frequency of about tone 255, high pass filter 4 has a cut off frequency of about tone 32, low pass filter 7 has a cut off frequency of about tone 31, low pass filter 23 has a cut off frequency of tone 31, high pass filter 24 has a cut off frequency of about tone 7, and high pass filter 27 has a cut off frequency of about tone 32.

This prior art modem system is flexible insufficiently. For example for video on demand, there should be more bandwidth available for the downstream, and less for the upstream, possibly dependently upon a signal quality and/or an amount of money to be paid.

The modem system according to the invention is more flexible, due to said first modem 1 comprising at least one analog filter 3,4,7,9 which is tunable in response to a request signal. By providing said first modem 1 with said tunable analog filter 3,4,7,9 the modem 1 can react to and/or allow and/or introduce changed upstream/downstream bandwidths. Said request signal for example originates from a network-unit comprising this first modem 1 or from other parts of a network comprising this network-unit, and is for example generated in response to more or less capacity being available in said network for example via line 40. This request signal for example arrives at first modem 1 via a connection not shown, and is received by receiver 12, which supplies this request signal to controller 10. In response to this, controller 10 for example detects this request signal requesting the tuning of one or more of the analog filters 3,4,7,9 in modem 1, and for example converts said request signal into a tuning signal and sends said tuning signal via a control connection to one or more of said analog filters 3,4,7,9 for tuning purposes.

The invention is based on the insight, inter alia, that fixed filters are used for fixed bandwidths, and is based upon the basic idea, inter alia, that a more flexible modem system should have flexible bandwidths. The invention solves the problem, inter alia, of providing a modem system which is more flexible.

Said at least one tunable analog filter 3,4,7,9 for example is a tunable high pass filter 4 located in the transmitting part 3,4,5 of said first modem 1. By amending the high pass filter 4 located in the transmitting part 3,4,5 of said first modem 1 into a tunable high pass filter 4, for example the cut off frequency can be decreased upon request (for example from a cut off frequency of about tone 32 to a cut off frequency of about tone 16), thereby introducing more bandwidth for the downstream.

Said second modem 21 for example comprises a generator 31 for generating said request signal. By providing the second modem 21 with the generator 31 for generating said request signal, the second modem 21 can request more bandwidth for the downstream, for example for video on demand services. Then, at the moment of requesting video on demand, either for example said modem 21 detects this request via a detector not shown and possibly forming part of controller 30, in response to which generator 31 generates said request signal, or a user operating said terminal instructs generator 31 via controller 30 to generate said request signal. This request signal is for example via the upstream or a prior art baseband control channel sent to modem 1, where it is received by receiver 12, which supplies this request signal to controller 10. In response to this, controller 10 for example detects this request signal requesting the tuning of high pass filter 4 in modem 1, and for example converts said request signal into a tuning signal and sends said tuning signal via control connection 15 to high pass filter 4, which in response for example reduces its cut off frequency of about tone 32 to a cut off frequency of about tone 16.

Said second modem 21 for example comprises at least one analog filter 23,24,27,29 which is tunable in response to a further request signal originating from said generator 31. By providing said second modem 21 with said tunable analog filter 23,24,27,29, the modem 21 can react to and/or allow and/or introduce changed upstream/downstream bandwidths, and the modem system has become even more flexible. Said further request signal either corresponds with said request signal or is different from said request signal, but will usually originate from said generator 31. This further request signal is sent from generator 31 to controller 30, which for example detects this further request signal requesting the tuning of one or more of analog filters 23,24,27,29 in modem 1, and for example converts said further request signal into a further tuning signal and sends said further tuning signal via a control connection to one or more of said analog filters 23,24,27,29 for tuning purposes.

Said at least one tunable analog filter 23,24,27,29 for example is a tunable low pass filter 23 located in the transmitting part 23,24,25 of said second modem 21, and is for example tuned by said further tuning signal arriving from controller 30 via control connection 35. By amending the low pass filter 23 located in the transmitting part 23,24,25 of said second modem 21 into a tunable low pass filter 23, for example the cut off frequency can be decreased upon request, thereby introducing less bandwidth for the upstream, and thus creating more bandwidth for the downstream.

At least one tunable analog filter 3,4,7,9,23,24,27,29 comprises at least one filter element which is (de)activatable via at least one switch. By (de)activating at least one filter element, like for example a capacity, via at least one switch, like for example a relais or a transistor, in an analog filter, this analog filter has been made tunable in a reliable, low cost way. For example a high pass filter may comprise between input and output a resistor-capacitor-combination (serial capacitor between input and output with one of said inputs and outputs being coupled to earth via the resistor), whereby a cut off frequency may be changed by switching (activating) in other words connecting another capacitor parallelly to said capacitor, or by switching off (deactivating) in other words disconnecting another capacitor parallelly to said capacitor. And for example a low pass filter may comprise between input and output a resistor-capacitor-combination (serial resistor between input and output with one of said inputs and outputs being coupled to earth via the capacitor), whereby a cut off frequency may be changed by switching (activating) in other words connecting another capacitor parallelly to said capacitor, or by switching off (deactivating) in other words disconnecting another capacitor parallelly to said capacitor. Further, another capacitor serially to said capacitor may be switched (activated) by disconnecting a short-circuit-connection parallelly to this other capacitor and may be switched off (deactivated) by connecting a short-circuit-connection parallelly to this other capacitor, etc. Other filter elements like for example inductivities and other possibly more complex combinations of filter elements are not to be excluded. Prior art tunable analog filters are known to persons skilled in the art, and used for compensating inaccuracies in components.

Each embodiment and/or each possibility can be combined with each other embodiment and/or each other possibility. Each part of modem 1,21 shown in the form of a block or not shown, can be 100% hardware, 100% software or a mixture of both. However, generally, the blocks forming part of processor/memory 2,22 will be software related, and the other blocks coupled to processor/memory 2,22 will be hardware related. A generator comprises a generating function and a receiver comprises a receiving function. Each block shown or not shown can be integrated and/or combined with each other block shown and/or not shown. Especially for example receiver 12,32 and generator 11,31 could advantageously be integrated with controller 10,30. But for example high pass filter 24 and hybrid 26 could also be integrated, and for example high pass filter 24 and driver 25 could trade places. Generally per transmitting part and per receiving part, blocks can be integrated and/or trade places. Hybrids 6,26 may further comprise POTS (Plain Ordinary Telephony System) splitters and/or ISDN (Integrated Services Digital Network) splitters. Line 40 therefore could for example be a POTS line and/or an ISDN line for bidirectional traffic (with traffic signals flowing in both directions either for example at the same moments in time or for example with each direction using its own different time slots).

In case of modems 1,21 needing to be equal, for example to allow the production of just one kind of modem instead of different kinds, each one of said modems should have at least two tunable (adaptable) filters, and certain filters, drivers, amplifiers etc. should be made adaptable and/or (de)activatable for example in response to a mode signal.

The invention is not limited to the above described embodiments. Certain filters, drivers, amplifiers etc. can be left out, under certain conditions, and further filters, drivers, amplifiers etc. should be introduced, for certain situations. Finally, according to the invention, per modem, there will be at least one tunable filter.

## Claims

1. Modem system comprising a first modem (1) and a second modem (21) coupled via a bidirectional line (40), with each modem (1,21) comprising a transmitting part (3,4,5,23,24,25) and a receiving part (7,8,9,27,28,29), with each part comprising at least one analog filter (3,4,7,9,23,24,27,29), **characterised in that** said first modem (1) comprises at least one analog filter (3,4,7,9) which is tunable in response to a request signal.

2. Modem system according to claim 1, **characterised in that** said at least one tunable analog filter (3,4,7,9) is a tunable high pass filter (4) located in the transmitting part (3,4,5) of said first modem (1).

3. Modem system according to claim 1 or 2, **characterised in that** said second modem (21) comprises a generator (31) for generating said request signal.

4. Modem system according to claim 3, **characterised in that** said second modem (21) comprises at least one analog filter (23,24,27,29) which is tunable in response to a further request signal originating from said generator (31).

5. Modem system according to claim 4, **characterised in that** said at least one tunable analog filter (23,24,27,29) is a tunable low pass filter (23) located in the transmitting part (23,24,25) of said second modem (21).

6. Modem system according to claim 1, 2, 3, 4 or 5, **characterised in that** at least one tunable analog filter (3,4,7,9,23,24,27,29) comprises at least one filter element which is (de)activatable via at least one switch.

7. First modem (1) for use in a modem system comprising said first modem (1) and a second modem (21) coupled via a bidirectional line (40), with each modem (1,21) comprising a transmitting part (3,4,5,23,24,25) and a receiving part (7,8,9,27,28,29), with each part comprising at least one analog filter (3,4,7,9,23,24,27,29), **characterised in that** said modem (1) comprises at least one analog filter (3,4,7,9) which is tunable in response to a request signal.

8. Second modem (21) for use in a modem system comprising a first modem (1) and said second modem (21) coupled via a bidirectional line (40), with each modem (1,21) comprising a transmitting part (3,4,5,23,24,25) and a receiving part (7,8,9,27,28,29), with each part comprising at least one analog filter (3,4,7,9,23,24,27,29), **characterised in that** said second modem (21) comprises at least one analog filter (23,24,27,29) which is tunable in response to a request signal.

9. First modem method for use in a modem system comprising a first modem and a second modem coupled via a bidirectional line, with each modem comprising a transmitting part and a receiving part, with each part comprising at least one analog filter, **characterised in that** said method comprises the step of tuning at least one analog filter in response to a request signal.

10. Second modem method for use in a modem system comprising a first modem and a second modem coupled via a bidirectional line, with each modem comprising a transmitting part and a receiving part, with each part comprising at least one analog filter, **characterised in that** said method comprises the step of tuning at least one analog filter in response to a request signal.
